## Europäisches Patentamt
## European Patent Office
## Office européen des brevets

(19)

(11) Publication number: **0 188 300**
**B1**

(12)

# EUROPEAN PATENT SPECIFICATION

(45) Date of publication of the patent specification: **12.04.89**

(51) Int. Cl.⁴: **B 29 C 45/14, F 16 L 47/06**

(21) Application number: **86200030.4**

(22) Date of filing: **09.01.86**

(54) Method for manufacturing a sealing body, particularly for a pipe joint, and a sealing body produced by this method.

(30) Priority: **14.01.85 NL 8500073**

(43) Date of publication of application:
**23.07.86 Bulletin 86/30**

(45) Publication of the grant of the patent:
**12.04.89 Bulletin 89/15**

(84) Designated Contracting States:
**AT BE CH DE FR GB IT LI LU NL SE**

(56) References cited:
**EP-A- 0 017 300**
**FR-A- 2 064 971**
**US-A- 3 063 097**

(73) Proprietor: **WAVIN B.V., Händellaan 251, NL-8031 EM Zwolle (NL)**

(72) Inventor: **Beune, Johannes Hendrikus, 79, Zoom, NL-5061 RB Oisterwijk (NL)**
Inventor: **Laarhoven, Johannes Josephus, 16, Scholtensdijk, NL-7771 CV Hardenberg (NL)**

(74) Representative: **van der Veken, Johannes Adriaan et al, EXTERPATENT B.V. P.O. Box 90649, NL-2509 LP 's-Gravenhage (NL)**

ACTORUM AG

# Description

The invention relates to a method for manufacturing a sealing body, particularly for a pipe joint, comprising a retaining ring of thermoplastic material, which is to be fastened to an end portion of a pipe part, and a sealing ring disposed coaxially to said retaining ring and bonded thereto, which method comprises moulding the retaining ring and moulding the sealing ring in a mould cavity which is partly bounded by a portion of the wall of the previously moulded retaining ring, during moulding of the sealing ring the mould cavity for the sealing ring being sealed at at least one transition from the wall of portion of the retaining ring bounding the mould cavity to an adjoining mould wall portion bounding the mould cavity.

A method of this kind is known from EP-A-0 017 300.

In this known method a retaining ring of thermoplastic material, having a substantially J-shaped cross-section, is moulded first and then placed between a number of cooperating parts of a mould. Together with that part of the retaining ring which projects substantially inwards, these mould parts form a mould cavity for the sealing ring which is moulded by casting or injection moulding in this mould cavity, whereby a connection is made between the sealing ring and the retaining ring. During moulding of the sealing ring the mould cavity for the sealing ring is sealed in that the retaining ring is placed in contact with the adjoining mould parts.

Problems occur with this method, particularly when the sealing ring is moulded by injection moulding.

During injection moulding of the sealing ring the relatively soft material of the retaining ring is pressed away, at the transition from the wall portion of the retaining ring bounding the mould cavity to the mould wall portions bonding the mould cavity, by the highly fluid material of the sealing ring which is injected under very high pressure into the mould cavity. The material of the sealing ring thus passes to places where it is not desired and a sealing body of poor quality is obtained, which in many cases is unusable. The sealing body is certainly unusable if sealing ring material passes to the space between the inner side of the retaining ring and the opposite mould part. In that case the recesses on the inner side of the retaining ring will be filled with sealing ring material and the retaining ring cannot be fastened anymore to an end portion of a pipe part.

It is the object of the invention to provide a solution to this problem.

This object is attained by a method of the abovementioned kind, which is characterized in that the mould cavity for the sealing ring is sealed by at least an annular ridge provided on the retaining ring at a second transition from the wall portion of the retaining ring bounding the mould cavity to an adjoining mould wall portion bounding the mould cavity and cooperating clampingly with an oppositely situated part of the adjoining mould wall portion.

With the method according to the invention it is guaranteed that during injection moulding of the sealing ring sealing material can not pass to the space between the inner side of the retaining ring and the opposite part, so that a sealing body of good quality is obtained which can always be fastened to an end portion of a pipe part.

The annular ridge is expediently clamped on the outer periphery of a part of a mould, which part is situated inside the retaining ring and bounds the moulding cavity.

The mould cavity for the sealing ring is preferably also be sealed by an annular lip provided on the retaining ring at a first transition from the wall portion of the retaining ring bounding the mould cavity to an adjoining mould wall portion bounding the mould cavity and extending in the direction of the sealing ring to be moulded and having a thickness which expediently decreases in the direction of the free end of the lip, which lip during the moulding of the sealing ring lies against the adjoining mould wall portion.

Through the action of the injected sealing ring material flowing at high speed into the mould cavity, the lip is thus pressed against the wall of the mould cavity, so that a very good sealing action is obtained during the injection of the sealing ring material.

FR-A-2 064 971 describes a method for manufacturing a body comprising a first member and a second member bounded thereto, the first member being previously moulded and the second member being moulded in a mould cavity which is partly bounded by a portion of the first member wall. The first member is provided with sealing means in the form of a lip, which during the injection moulding of the second member forms a seal with the adjoining mould wall portion. From FR-A-2 064 971 the provision of a lip as sealing means for mould cavity is known per se, however the product manufactured by the method described in FR-A-2 064 971 is quite different from the product manufactured by the method according to the invention.

The invention likewise relates to a sealing body for a pipe joint of the type stated in the aforementioned EP-A-0 017 300, that is to say comprising a retaining ring of thermoplastic material, which is to be fastened on the end portion of a pipe part, and a sealing ring disposed coaxially to said retaining ring and bonded thereto, wherein the retaining ring is provided with an annular ridge at a transition from the wall of the retaining ring to the wall of the sealing ring, which transition, viewed in a cross-section of the sealing body, is situated on the inner periphery of said cross-section of the sealing body. The sealing body according to the invention is characterized in that the retaining ring is provided at another transition from the wall of the retaining ring to the wall of the sealing ring, with an annular lip which, viewed in a cross-section of the sealing body, extends on the outer periphery of said cross-section of the sealing body in the direction of the sealing ring.

The invention will now be explained through the description of an example of embodiment and with reference to the drawing, wherein:

Figure 1 shows a sealing body according to the invention, partly in cross-section and partly in elevation, and Figure 2 is a cross-section on a larger scale of the mould cavity for the sealing ring of the sealing body shown in Figure 1.

Figure 3 shows a part of the walls bounding the mould cavity for the sealing ring on a larger scale, with the mould cavity not yet completely closed.

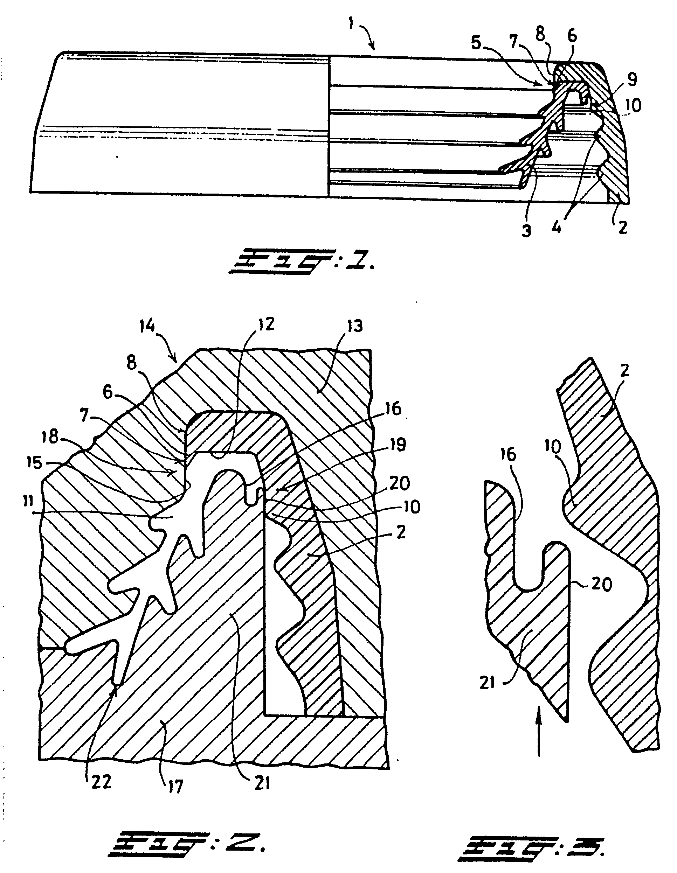

In figure 1 is shown a sealing body 1 for a pipe joint, comprising a retaining ring 2 of thermoplastic material, which is to be fastened to an end portion (not shown) of a pipe part, and a sealing ring 3 disposed coaxially to said retaining ring and bonded thereto. The sealing ring 3 preferably consists of a thermoplastic rubber. The retaining ring 2 is provided on its inner side with annular ridges 4 adapted to cooperate with complementarily shaped annular depressions on an end portion of a pipe part, for the purpose of fastening a sealing body 1 to the pipe part.

At a first transition 5 from the wall of the retaining ring 2 to the wall of the sealing ring 3 the retaining ring 2 is provided with an annular lip 6 extending in the direction of the sealing ring 3. The wall 7 of the lip 6, situated on the outer periphery of the cross-section of the sealing body 1, lies substantially in the same plane as the adjoining part 8 of the wall of the retaining ring 2. The thickness of the lip 6 decreases in the direction of its free end.

At a second transition 9 from the wall of the retaining ring 2 to the wall of the sealing ring 3 the retaining ring 2 is provided with an annular ridge 10.

Figure 2 is a cross-section of the mould cavity 11 for the sealing ring 3 of the sealing body 1. The mould cavity 11 is bounded by a portion 12 of the wall of the previously moulded retaining ring 2, which is placed in a recess in a part 13 of a mould 14, and is further bounded by a portion 15 of the wall of a mould part 13 and a portion 16 of the wall of a mould part 17 which is situated partly inside the retaining ring 2. The retaining ring 2 is provided with sealing means 6, 10 in the form of an annular lip 6 and an annular ridge 10, which during the injection moulding of the sealing ring 3 cooperate to form a seal with the respective adjoining wall portions 15 and 16 of the mould cavity 11 at the transitions 18, 19 from the wall portion 12, bounding the mould cavity 11, of the retaining ring 2 to an adjoining wall portion 15 and 16 respectively of a wall bounding the mould cavity.

At the transition 18 from the wall portion 12 of the retaining ring 2 to the wall portion 15 of the mould part 13, the outer wall 7 of the lip 6 lies against the wall 15 of the mould part 13.

At the transition 19 from the wall portion of the retaining ring 2 to the wall portion 16 of the die part 17, the annular ridge 10 lies clampingly against the oppositely situated outer periphery 20 of that part 21 of the mould part 17 which lies inside the retaining ring (see also Figure 3).

Because of the abovementioned sealing means 6, 10 good sealing is effected at the transitions 18, 19 during the injection under high pressure of the highly liquid material of the sealing ring into the mould cavity 11. Particularly when the gate is situated at the end 22 of the mould cavity 11, the lip 6 is pressed against the wall 15 through the action of the material flowing in at high speed, so that very good sealing is achieved at the transition 18.

Through the application of the steps described above a sealing body is obtained which is of very good quality and at the transitions 6, 9 is free from so-called «butterflies» of sealing ring material.

The invention is not restricted to the embodiment of the sealing body described in the example, but also extends to other embodiments of a composite sealing body in the production of which the sealing problems previously referred to occur.

## Claims

1. Method for manufacturing a sealing body (1), particularly for a pipe joint, comprising a retaining ring (2) of thermoplastic material, which is to be fastened to an end portion of a pipe part, and a sealing ring (3) disposed coaxially to said retaining ring and bonded thereto, which method comprises moulding the retaining ring (2) and moulding the sealing ring (3) in a mould cavity (11) which is partly bounded by a portion (12) of the wall of the previously moulded retaining ring (2), during the moulding of the sealing ring (3) the mould cavity (11) for the sealing ring (3) being sealed at at least one transition (18, 19) from the wall portion (12) of the retaining ring (2) bounding the mould cavity (11) to an adjoining mould wall portion (15, 16) bounding the mould cavity (11), characterized in that the mould cavity (11) for the sealing ring (3) is sealed by at least an annular ridge (10) provided on the retaining ring (2) at a second transition (19) from the wall portion (12) of the retaining ring (2) bounding the mould cavity (11) to an adjoining mould wall portion (16) bounding the mould cavity (11) and cooperating clampingly with an oppositely situated part (20) of the adjoining mould wall portion (16).

2. Method according to claim 1, characterized in that the annular ridge (10) is clamped on the outer periphery (20) of a part (21) of a mould, which part is situated inside the retaining ring (2) and bounds the moulding cavity (11).

3. Method according to claim 1 or 2, characterized in that the mould cavity for the sealing ring (3) is also sealed by an annular lip (6) provided on the retaining ring (2) at a first transition (18) from the wall portion (12) of the retaining ring (2) bounding the mould cavity (11) to an adjoining mould wall portion (15) bounding the mould cavity (11) and extending in the direction of the sealing ring (3) to be moulded and having a thickness which expediently decreases in the direction of the free end of the lip (6), which lip (6) during the moulding of the sealing ring (3) lies against the adjoining mould wall portion (15).

4. Sealing body for a pipe joint, comprising a retaining ring of thermoplastic material, which is to be fastened on the end portion of a pipe part, and a sealing ring disposed coaxially to said retaining ring and bonded thereto, wherein the retaining ring (2) is provided with an annular ridge (10) at a transition (9) from the wall of the retaining ring (2) to the wall of the sealing ring (3), which transition (9), viewed in a cross-section of the sealing body (1), is situated on the inner periphery of said cross-section of the sealing body, characterized in that the retaining ring is provided at another transition (5) from the wall of the retaining ring (2) to the wall of the sealing ring (3), with an annular lip (6) which, viewed in a cross-section of the sealing body (1), extends on the outer periphery of said cross-section of the sealing body in the direction of the sealing ring (3).

5. Sealing body according to claim 4, characterized in that wall of the lip (6) which is situated on the outer periphery lies substantially in the same plane as the adjoining part (8) of the wall of the retaining ring (2).

6. Sealing body according to claim 4 or 5, characterized in that the thickness of the lip (6) decreases in the direction of its free end.

7. Sealing body according to one or more of the claims 4 to 6, characterized in that the sealing ring (3) consists of a thermoplastic material, particularly a thermoplastic rubber.

## Patentansprüche

1. Verfahren zum Herstellen eines Dichtungskörpers (1), insbesondere für eine Rohrverbindung, bestehend aus einem Haltering (2) aus thermoplastischem Material, der an einem Endbereich eines Rohrteils zu befestigen ist, und einem Dichtungsring (3), der koaxial zum Haltering angeordnet und mit diesem verbunden ist, wobei das Verfahren darin besteht, dass der Haltering (2) geformt wird und der Dichtungsring (3) in einem Formraum (11) geformt wird, der teilweise von einem Bereich (12) der Wand des zuvor geformten Halterings (2) begrenzt ist, und während des Formens des Dichtungsrings (3) der Formraum (11) für den Dichtungsring (3) an zumindest einem Übergang (18, 19) von dem den Formraum (11) begrenzenden Wandbereich (12) des Halterings (2) zu einem angrenzenden, den Formraum (11) begrenzenden Formwandbereich (15, 16) abgedichtet wird, dadurch gekennzeichnet, dass der Formraum (11) für den Dichtungsring (3) durch zumindest einen Ringsteg (10) abgedichtet wird, der am Haltering (2) an einem zweiten Übergang (19) von dem den Formraum (11) begrenzenden Wandbereich (12) des Halterings (2) zu einem angrenzenden den Formraum (11) begrenzenden Formwandbereich (16) vorgesehen ist und mit Klemmeingriff mit einem gegenüberliegenden Teil (20) des angrenzenden Formwandbereichs (16) zusammenwirkt.

2. Verfahren nach Anspruch 1, dadurch gekennzeichnet, dass der Ringsteg (10) auf den Aussenumfang (20) eines Teils (21) einer Form geklemmt wird, der auf der Innenseite des Halterings (2) liegt und den Formraum (11) begrenzt.

3. Verfahren nach Anspruch 1 oder 2, dadurch gekennzeichnet, dass der Formraum für den Dichtungsring (3) ferner von einer Ringlippe (6) abgedichtet wird, die am Haltering (2) an einem ersten Übergang (18) von dem den Formraum (11) begrenzenden Wandbereich (12) des Halterings (2) zu einem angrenzenden, den Formraum (11) begrenzenden Formwandbereich (15) vorgesehen ist, sich in Richtung des zu formenden Dichtungsrings (3) erstreckt und eine Dicke aufweist, die zweckmässig in Richtung des freien Endes der Lippe (6) abnimmt, wobei die Lippe (6) während des Formens des Dichtungsrings (3) am angrenzenden Formwandbereich (15) anliegt.

4. Dichtungskörper für eine Rohrverbindung, bestehend aus einem Haltering aus thermoplastischem Material, der am Endbereich eines Rohrteils zu befestigen ist, und einem Dichtungsring, der koaxial zum Haltering angeordnet und mit diesem verbunden ist, wobei der Haltering (2) mit einem Ringsteg (10) an einem Übergang (9) von der Wand des Halterings (2) zu der Wand des Dichtungsrings (3) versehen ist, welcher Übergang (9), im Querschnitt des Dichtungskörpers (1) betrachtet, am Innenumfang des Dichtungskörperquerschnitts gelegen ist, dadurch gekennzeichnet, dass der Haltering an einem weiteren Übergang (5) von der Wand des Halterings (2) zu der Wand des Dichtungsrings (3) mit einer Ringlippe (6) versehen ist, die sich, im Querschnitt des Dichtungskörpers (1) betrachtet, am Aussenumfang des Dichtungskörperquerschnitts in Richtung des Dichtungsrings (3) erstreckt.

5. Dichtungskörper nach Anspruch 4, dadurch gekennzeichnet, dass diejenige Wand der Lippe (6), die sich am Aussenumfang befindet, im wesentlichen in der gleichen Ebene wie der angrenzende Teil (8) der Wand des Halterings (2) liegt.

6. Dichtungskörper nach Anspruch 4 oder 5, dadurch gekennzeichnet, dass die Dicke der Lippe (6) in Richtung ihres freien Endes abnimmt.

7. Dichtungskörper nach einem oder mehreren der Ansprüche 4 bis 6, dadurch gekennzeichnet, dass der Dichtungsring (3) aus einem thermoplastischen Material, insbesondere einem thermoplastischen Gummi, besteht.

## Revendications

1. Procédé pour fabriquer un corps d'étanchéité (1), notamment un raccord pour tuyaux, comprenant une bague de retenue (2) réalisée en un matériau thermoplastique, qui doit être fixée à une partie d'extrémité d'un élément de tuyau, et une bague d'étanchéité (3) disposée coaxialement par rapport à ladite bague de retenue et fixée à celle-ci, ce procédé incluant le moulage de la bague de retenue (2) et le moulage de la bague d'étanchéité (3) dans la cavité (11) d'un moule, qui est partiellement limitée par un élément (12) de la paroi de la bague de retenue (2) moulée auparavant, la cavité (11) du moule pour la bague d'étanchéité (3) étant fermée de façon étanche, pendant le moulage de cette bague d'étanchéité (3), au niveau d'au moins une transition (18, 19) entre l'élément de paroi (12) de la bague de retenue (2), qui délimite la cavité (11) du moule, et un élément de paroi contigu (15, 16) du moule, qui délimite la cavité (11) de ce dernier, caractérisé en ce que la cavité (11) du moule pour la bague d'étanchéité (3) est fermée de façon étanche par au moins une nervure annulaire (10) prévue sur la bague de retenue (2) au niveau d'une seconde transition (19) entre l'élément de paroi (12) et la bague de retenue (2), qui délimite la cavité (11) du moule, et un élément de paroi contigu (16) du moule, qui délimite la cavité (11) de ce dernier et coopère par serrage avec une partie (20), située en vis-à-vis, de l'élément de paroi contigu (16) du moule.

2. Procédé selon la revendication 1, caractérisé en ce que la nervure annulaire (10) est serrée sur le pourtour extérieur (20) d'un élément (21) d'un moule, cet élément étant situé à l'intérieur de la bague de retenue (2) et délimitant la cavité (11) du moule.

3. Procédé selon la revendication 1 ou 2, caractérisé en ce que la cavité du moule pour la bague d'étanchéité (3) est également fermée de façon étanche par une lèvre annulaire (6) prévue sur la bague de retenue (2) au niveau d'une première transition (18) entre l'élément de paroi (12) de la bague de retenue (2), qui délimite la cavité (11) du moule, et un élément de paroi contigu (15) du moule, qui délimite la cavité (11) du moule, qui s'étend en direction de la bague d'étanchéité (3) devant être moulée et possède une épaisseur qui diminue de façon appropriée en direction de l'ex-

trémité libre de la lèvre (6), qui, pendant le moulage de la bague d'étanchéité (3), s'applique contre l'élément de paroi contigu (15) du moule.

4. Corps d'étanchéité pour un raccord pour tuyaux, comprenant une bague de retenue réalisée en un matériau thermoplastique, qui doit être fixée à la partie d'extrémité d'un élément de tuyau, et une bague d'étanchéité disposée coaxialement par rapport à ladite bague de retenue et fixée à cette dernière, et dans lequel la bague de retenue (2) comporte une nervure annulaire (10) au niveau d'une transition (9) entre la paroi de la bague de retenue (2) et la paroi de la bague d'étanchéité (3), cette transition (9) étant située, lorsqu'on regarde une coupe transversale du corps d'étanchéité (1), sur le pourtour intérieur de ladite section transversale du corps d'étanchéité, caractérisé en ce que la bague de retenue comporte, au niveau d'une autre transition (5) entre la paroi de la bague de retenue (2) et la paroi de la bague d'étanchéité (3), une lèvre annulaire (6) qui, lorsqu'on regarde une coupe transversale du corps d'étanchéité (1), s'étend sur le pourtour extérieur de ladite section transversale du corps d'étanchéité en direction de la bague d'étanchéité (3).

5. Corps d'étanchéité selon la revendication 4, caractérisé en ce que la paroi de la lèvre (6), qui est située sur le pourtour extérieur, est disposée sensiblement dans le même plan que l'élément contigu (8) de la paroi de la bague de retenue (2).

6. Corps d'étanchéité selon la revendication 4 ou 5, caractérisé en ce que l'épaisseur de la lèvre (6) diminue en direction de son extrémité libre.

7. Corps d'étanchéité selon une ou plusieurs des revendications 4 à 6, caractérisé en ce que la bague d'étanchéité (3) est réalisée en un matériau thermoplastique, en particulier un caoutchouc thermoplastique.

FIG. 1.

FIG. 2.

FIG. 3.